# EUROPEAN PATENT SPECIFICATION

(11) **EP 1 269 049 B1**
(45) Date of publication and mention of the grant of the patent: **22.03.2006**
(21) Application number: 00957518.4
(22) Date of filing: 17.08.2000
(51) Int. Cl.: F16K 5/10, F16K 5/06

(54) **BALL VALVE WITH ADJUSTABLE FLOW COEFFICIENT**
KUGELVENTIL MIT JUSTIERBAREM DURCHFLUSSKOEFFIZIENTEN
CLAPET A BILLE A COEFFICIENT DE DEBIT REGLABLE

(30) Priority: 17.08.1999 US 149398 P
(43) Date of publication of application: 02.01.2003
(73) Proprietor: Belimo Holding Aktiengesellschaft, 8620 Wetzikon (CH)
(72) Inventor: Carlson, Bengt A., Stamford, CT 06906 (US)
(74) Representative: Vossius & Partner
(86) International application number: PCT/US2000/022582
(87) International publication number: WO 2001/013019

(56) References cited:
- US-A- 3 762 682
- US-A- 5 566 923

## Description

Ball valves are among other things used for modulating control of fluids in HVAC and industrial process applications.

Full ported ball valves have a very large flow coefficient (CV-value) compared to its size. This means that if the valve is connected to a pipe of the same size and the flow rate is within the normally specified range for the pipe size, the pressure drop produced by the ball valve will be very small, when fully open.

The pipe and the controlled object, such as a heat exchanger, coil etc, have much larger pressure drops. This means that the ball valve has very little authority over the flow as it begins to close. The valve needs to close so much that it produces a pressure drop almost as large as the control object and pipe combined, before any significant reduction of the flow rate will take place.

This means that a large portion of the operating range of the valve is ineffectual. Control of the flow will only take place over a very small portion of the operating range, near the closed position. Therefore, it is hard for the actuator to operate the valve to the exact position that supplies the correct flow rate. Even a small movement causes a disproportionately large change in the output from the connected heat transfer device, and control stability is hard to achieve.

The flow coefficient is calculated by multiplying the FLOW (GPM) by the square root of the specific gravity of the fluid and then divide by the square root of the differential pressure (PSI or 6.895 kPa) across the fully open valve.

Valve sizing is based upon the flow coefficient A valve must have a sufficiently large flow coefficient so the needed maximum flow rate can be supplied. However, it must not be too large because it causes control problems.

The very large flow coefficient of a typical ball valve can be reduced by installing a characterizing disk with an essentially V-shaped opening, that interacts with the bore of the ball in the valve. This also determines the flow characteristics of the valve. U.S.-A-6,039,304 describes such a disk.

By changing the disk to a new disk with a smaller or larger opening, the flow coefficient can be changed, without replacing the valve.

The disk works very well, but it adds to the cost of the valve, and if the flow coefficient needs to be changed a new disk needs to be ordered and installed. Especially disks used in high temperature and high pressure process applications are relatively expensive.

As an alternative it is possible to use a ball with a specially shaped opening. When the flow coefficient needs to be changed, a new ball with a differently shaped opening is installed. However, this is costly alternative.

It is common that the flow coefficient needs to be changed, because the data the flow coefficient calculations are based upon often are very unreliable and does not reflect the actual operating conditions.

Even if the installed flow coefficient is correct when first installed, future changes in the operation conditions may necessitate a change of the flow coefficient.

US-A-5 566 923 discloses a coupling for use in a rotary ball valve having a spherical ball with a passageway therethrough for controlling the flow of fluid through the valve. A coupling includes a plurality of depressions and protrusions formed at the interface of the non-metallic and metallic components. The depressions and protrusions are positioned away from the central axis of the spherical ball. The depression and protrusions can be tapered and oriented at an angle with respect to the central axis so that as torque is applied to the shaft the non-metallic component is rotated without breakage thereof.

US-A-4 371 146 relates to a ball valve provided with a valve case forming an internal space that is centrally extending to opposite inlet and outlet sides. The ball valve element is disposed within the interior space and has a bore extending therethrough. A valve seat rotatably supports the ball valve element and a valve stem is fixed to one side of the ball valve element and has an operating lever at one end of the valve stem projecting therefrom outside the valve case. A flow adjustment internal valve assembly means is provided in the bore which comprises an internal cylindrical valve casing in the bore with an internal valve seat portion, and an axially movable internal valve element disposed within the internal cylindrical valve casing.

In a standard ball valve the length axis of the bore through the ball is perpendicular to the length axis of the stem that turns the ball.

The present invention is characterized by the features of the claims.

The new invention is a conventional quarter turn ball valve. Its stem turns 0 - 90 degrees and operates the ball as any standard ball valve, with it is maximum opening at 90 degrees and is closed at 0 degrees. The novelty is that the length axis of the bore through the ball is at a different angle than perpendicular to the stem.

This means that the ball is operated at an slanted orientation and the length axis of the bore will never line up with the length axis of the valve body. Not even when the stem is moved to the 90 degree position. The flow coefficient is reduced, by slanting the ball. The reduction becomes larger the more the ball is slanted.

The ball may be disposed so it can be installed in one way only, where it is slanted (offset) by one specific number of degrees. This results in a ball valve with a smaller flow coefficient than what is standard for the valve size. For example, the flow coefficient can be reduced to a value that is typical for a standard globe valve of the same size.

Alternatively, the ball is disposed in such a way that the ball can be installed at a number of different slanted positions. By installing the ball at a number of different slanted positions, the same valve, can provide a selection of different flow coefficients. This makes it possible to select a flow coefficient that best fits the application, and if needed changes can easily be made.

There are many different types of ball valves. Two piece ball valves have a body that comprises two parts. The most common and least expensive two-piece ball valve has one of the parts screwed into the other, and secured by for example epoxy. This valve is difficult to take apart and therefore best suited for a ball which is installed in one slanted position only.

Three piece ball valves have a midsection ("body") containing the ball and two connectors ("end caps"). The three pieces are bolted together. It easy to remove the midsection even when the valve is installed in a piping system. This facilitates the adjustment of the ball to the different slanted positions. The three piece ball valve is therefore well suited for balls that can be installed in multiple positions. However any type of ball valve can be used with the invention.

The invention is now described in detail in connection with the drawings.

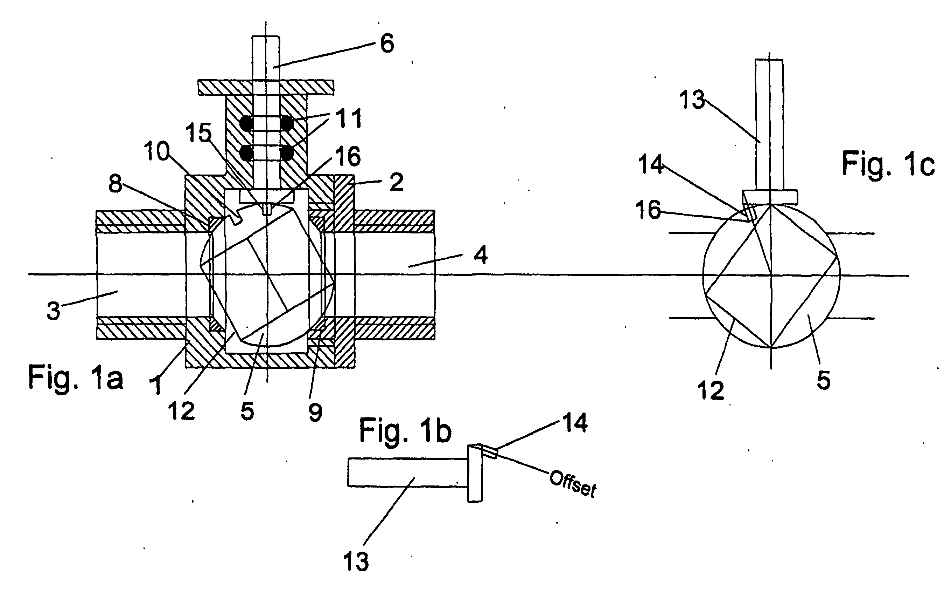

Fig. 1a, shows a cross section view of a ball valve. The body consists of two pieces 1 and 2. There are two connections 3 and 4 for the piping. There is a fluid passageway between the two connections 3 and 4. In the fluid passageway a ball 5 is installed. Through the ball 5 there is a bore 12. The ball 5 is suspended between two seats 8 and 9. The ball 5 has a number of grooves 10 and 16. The first groove 10 is at a 90 degree angle versus the length axis of the bore 12 through the ball 5. The second groove 16 is offset some degrees versus the first groove 10.
A stem 6, which can be operated by an external actuator, passes through the body 1. O-rings 11 seals the stem 6 or 13 against the body 1.

At the end of the stem 6 there is a blade 15 that mates with the groove 10 or 16. When the valve is assembled so the blade 15 is inserted into the first groove 10, the ball 5 is at the standard position, where the ball is not slanted at all. Therefore, the valve will behave as a standard ball valve and the largest flow coefficient is provided.

When the valve is assembled so the blade 15 is inserted into the second groove 16, the ball 5 is at a slanted position. The flow coefficient is therefore at a reduced value. (This position is shown in Fig. 1a.)

In Fig. 1b, an alternative version of stem is also shown. This stem 13 has a blade 14 that is shown offset to the side and at an angle to the centerline of the stem 13. When this stem 13 is used, the ball 5 is slanted already when the blade 14 is inserted into the first groove 10.

When the blade 14 is inserted into the second groove 16, the ball is very much slanted. The offset angles of the second groove 16 and the blade 14 are added to each other. The result is that the flow coefficient is very much reduced.
This can be seen in Fig. 1c.

By turning the stem 13 180 degrees and installing the ball 5 with the blade 14 in the second groove 16 a third flow coefficient is provided, because the offset angles of the second groove 16 and the blade 14 are subtracted from each other. Actually, the same thing will happen, but at a different angle if the blade 14 is inserted in the first groove 10. The ball 5 and stem 13 can be installed in four different positions and provide four different flow capacities.

Additional grooves can be added to the ball. For example, at the bottom of the ball.

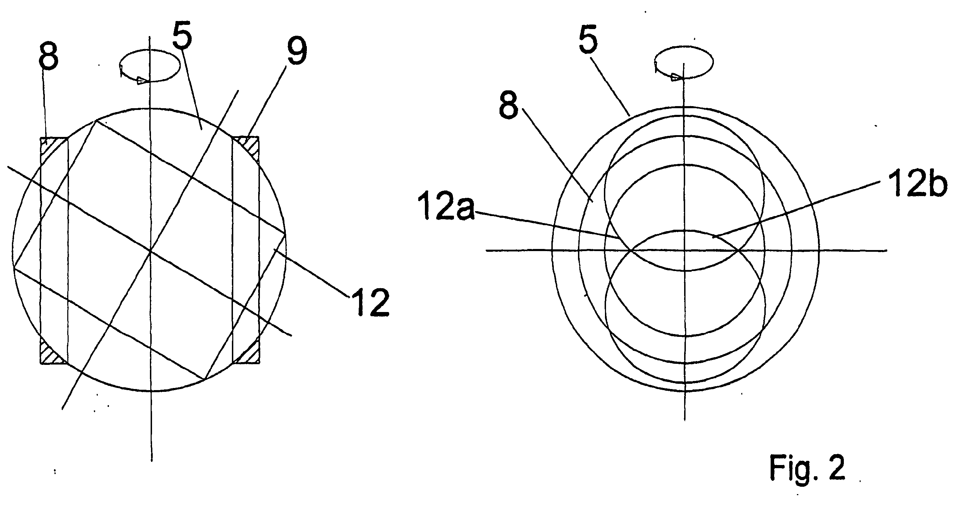

Fig. 2 shows how the opening 12 of the ball 5 and seats 8, 9 are interacting, when the ball is at the 90 degree position.
To the left there is a side view and to the right there is an end view.
The cross section area for the flow is different, depending upon how much the ball 5 is slanted.
As can be seen from the end view, the cross section is largest when there is no offset, because the cross section is defined by the inside diameter of the seats 8 and 9 only, which is about the same as the opening 12 through the ball 5.

The ellipses 12a and 12b shows how the opening 12 interacts with the seat 8 and 9 openings. The first ellipse 12a shows the opening in a ball that is offset by a relatively small angle and therefore the free area between the opening 12 and the seat 8 and 9 is slightly reduced.

The second ellipse 12b shows the opening in a ball that is offset by a relatively large angle and the free area between the opening 12 and the seat 8 and 9 is therefore reduced to a larger extent.

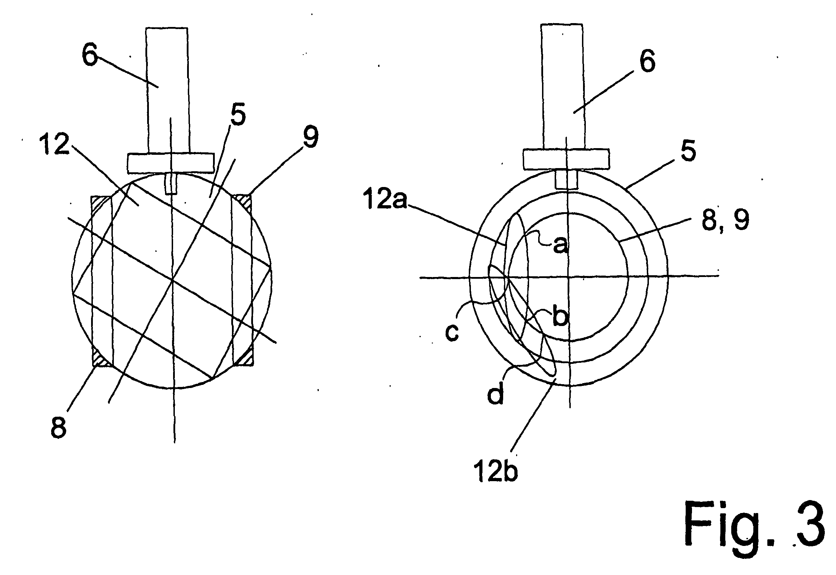

Fig. 3 shows to the left, a side view of the ball 5 its opening 12 stem 6 and seats 8 and 9 when the valve is open.
To the right there is an end view where the stem 6 has turned the ball 5 to a near closed position. There are two ellipses 12a and 12b. They represent the opening of the ball at the same stem position, but at different slant of the ball.

The first ellipse 12a belongs to a ball 5 with no slanting. The free area between the opening 12a and the seat 8 or 9 is relatively large. It is defined by the semi-circle between points "a" - "b" and the semi-ellipse between points "a" - "b".

The second ellipse 12b belongs to a slanted ball 5. The free area between the opening 12b and the seat 8 or 9 is relatively small. It is defined by the semi-circle between points "c" - "d" and the semi-ellipse between points "c" - "d".

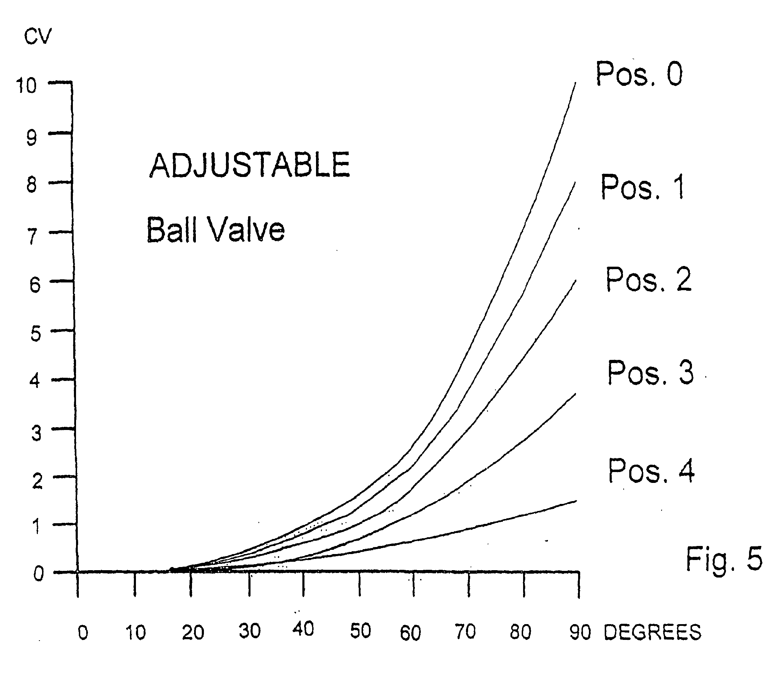

As can be understood, the free area, and flow coefficient, is reduced all over the operating range 0 - 90 degrees when the ball is slanted. See Fig. 5.

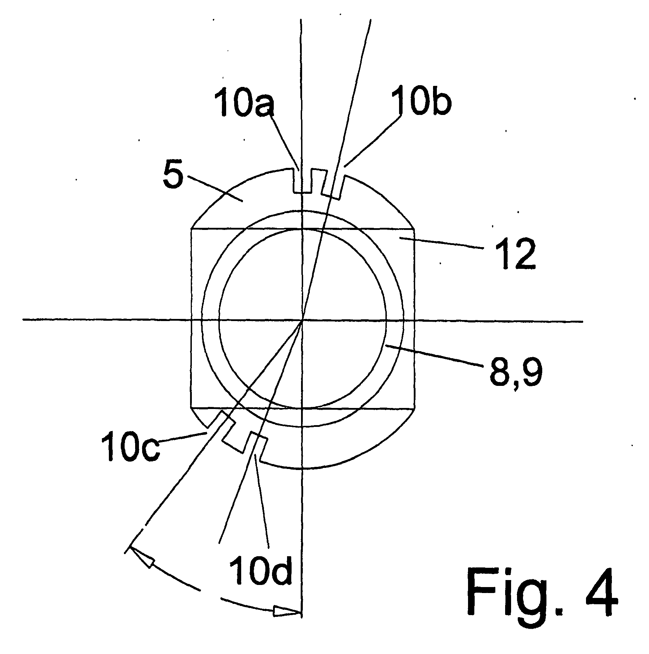

Fig. 4 shows a side view of a ball 5. At the top side there are two grooves 10a and 10b and at the bottom there are two grooves 10c and 10d.

By turning the ball 5 180 degrees around the length axis of the bore, the top 10a and 10b and bottom grooves 10c and 10d will exchange positions.

When a stem 6 with a blade 15 that has no offset is used, the ball 5 can be installed in four different ways, resulting in zero offset, plus three different degrees of offset.

A stem 13 with an offset blade 14 can be installed with the blade in two 180 degree opposed positions. When a ball with four grooves is used, the ball 5 can be installed in eight different ways, resulting in eight different flow coefficients.

The ball 5 can have any practical number of grooves the surface of the ball permits. However, groove positions that are offset so much that they interfere with the seats 8 and 9 should be avoided.

Fig. 5 shows a chart of the relationship between the stem 6 or 13 movement and the resulting CV value at the different positions 0 - 90 degress.

The ball is installed at different slanted positions versus the stem 6 or 13. The different positions are marked Pos. 1 - Pos. 4.

At Pos.1 there is no slanting of the ball 5. At Pos. 4 the ball 5 has the largest offset.

The inherent flow characteristics of a typical ball valve is close to equal percent, which is desirable for many control applications. When the flow coefficient is reduced, the equal percent characteristics is essentially maintained, but its curvature gets flatter.

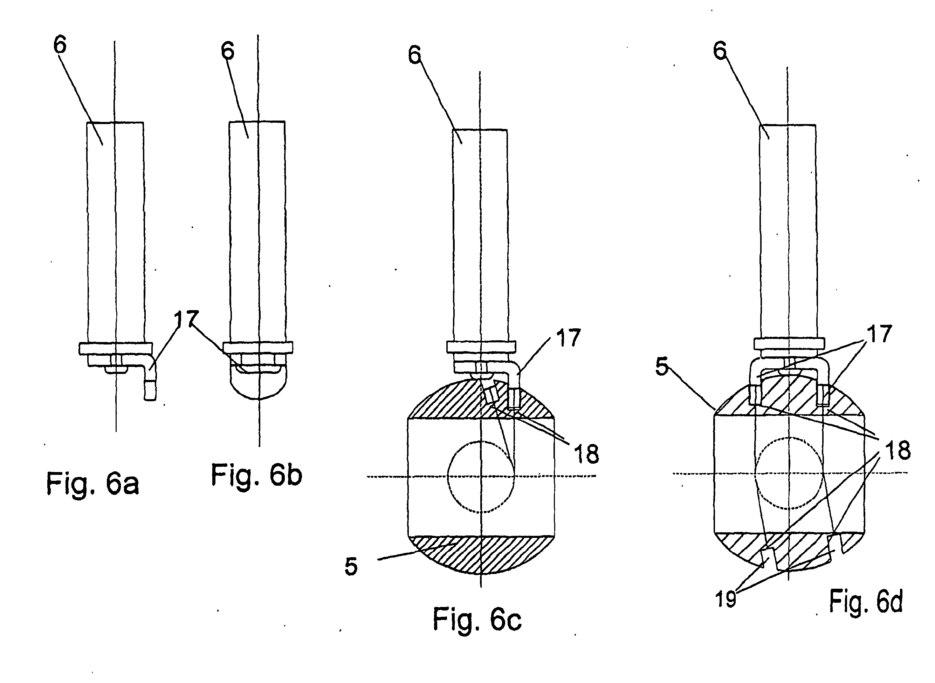

Fig. 6a shows a stem 6 with a separate blade 17 attached. The part that engages the groove in the ball is offset to the side.

Fig. 6b is a side view of Fig. 6a.

Fig. 6c shows the ball 5 and the stem 6 with its blade 17 engaged in one of the grooves 18 of the ball.

Fig. 6d shows a stem 6 with double blades 17 engaged in one pair of grooves 18 of the ball 5. A second pair of grooves 19 are located on the opposite side of the ball 5. The first pair of grooves 18 orients the ball with the center line for its fluid flow passageway perpendicular to the axis of rotation of the ball.
The second pair of grooves 19 orients the ball with the center line for its fluid flow passageway at an angle different from perpendicular to the axis of rotation of the ball.

The part of the blade 17 that engages the grooves 18 is shown in Fig. 6c and 6d parallel to the length axis of the stem 6.

However, any suitable angle can be used that matches the angle of the groove.

The blade 17 can have two parts engaging two grooves on the ball. One on each side of the center line for the stem. The blade 17 can have some spring action so the blade pushes against the side of the grooves and thereby eliminates play.

The invention can also be applied to three-way ball valves.

The present invention provides various advantages.

The flow coefficient can be reduced to a value that is useful for modulating control, without the use of disks or balls with specially shaped openings.
The cost is reduced.
When the ball (and stem) is disposed so the ball can be installed in with different degrees of offset, then the flow coefficient can selectively be changed in the field, without the need to exchange or add any parts. An essentially equal percent flow characteristics is maintained although the flow coefficient is changed.
Because one valve covers a large number of CV-values, inventory is reduced at all levels, from manufacturing through the chain of distribution.
Also, the inventory at maintenance department of the end user is reduced.
The apprehension of specifying the wrong (too small) CV-value is very much reduced, because it easily can be changed.
Future changes in the operating conditions can easily be met.

While particular embodiments of the present invention have been described in some detail above, changes and mod ifications may be made in the illustrated embodiments without departing from the scope of the invention. It is therefore intended that the following claims cover all equivalent modfications and variations as fully within the scope of the invention as defined by the claims.

## Claims

1. A valve of the type having a casing provided with openings to be connected to a fluid pipe line and having:
a valve chamber with at least one inlet port (3) and at least one outlet port (4) for connecting to a fluid pipe and defining a fluid flow passageway through the valve chamber having a centerline extending between the inlet port (3) and the outlet port (4);
a stem (6; 13) having an axis of rotation perpendicular to the centerline of the fluid flow passageway extending between the inlet port (3) and the outlet port (4);
a ball (5) mounted in the valve champer having a fluid flow passageway extending on a centerline through the ball, **characterized in that** said ball has at least two indentations (10, 16, 18, 19) for engagement with said stem (6; 13) to orient the ball (5) at at least two different positions such that at at least one of said positions the centerline for the fluid flow passageway extending through the ball (5) is held at an angle to the stem (6; 13) different from perpendicular.

2. The valve of claim 1, wherein the stem (6; 13) is fitted with an end piece (15, 14, 17) to mate with one indentation (10, 16, 18, 19) in the ball, at a position that is offset versus the length axis of the stem.

3. The valve of claim 2, where the end piece (15, 14, 17) can mate with one or more indentations (10, 16, 18, 19) in the ball (5).

4. The valve of claim 3, where the end piece (17) is a separate part fastened to the stem (6).

## Patentansprüche

1. Ventil von der Art mit einem Gehäuse, das mit Öffnungen versehen ist, die mit einer Fluid-Rohrleitung verbunden werden, und das aufweist:
eine Ventilkammer mit mindestens einem Einlassanschluss (3) und mindestens einem Auslassanschluss (4) zum Verbinden mit einer Fluid-Leitung zum Bereitstellen eines Durchlassweges für die Fluid-Strömung durch die Ventilkammer mit einer Mittellinie, der sich zwischen dem Einlassanschluss (3) und dem Auslassanschluss (4) erstreckt;
einen Schaft (6; 13) mit einer Rotationsachse rechtwinklig zur Mittellinie des Durchlassweges für die Fluid-Strömung, der sich zwischen dem Einlassanschluss (3) und dem Auslassanschluss (4) erstreckt;
eine Kugel (5), die in der Ventilkammer angeordnet ist und einen Durchlassweg für die Fluid-Strömung auf einer Mittellinie durch die Kugel hat,
**dadurch gekennzeichnet, dass**
die Kugel mindestens zwei Vertiefungen (10, 16, 18, 19) für einen Eingriff mit dem Schaft (6; 13) hat, um die Kugel (5) in mindestens zwei unterschiedlichen Stellungen auszurichten, so dass in mindestens einer der Stellungen die Mittellinie für den Durchlassweg für die Fluid-Strömung, die sich durch die Kugel (5) erstreckt, in einem Winkel zum Schaft (6; 13) gehalten wird, der sich von einem rechtwinkligen unterscheidet.

2. Ventil nach Anspruch 1, wobei der Schaft (6; 13) mit einem Endteil (15, 14, 17) ausgestattet ist, das mit einer Vertiefung (10, 16, 18, 19) in der Kugel in einer Stellung übereinstimmt, die gegen die Längsachse des Schaftes versetzt ist.

3. Ventil nach Anspruch 2, wobei das Endteil (15, 14, 17) mit einer oder mehreren Vertiefungen (10, 16, 18, 19) in der Kugel (5) übereinstimmen kann.

4. Ventil nach Anspruch 3, wobei das Endteil (17) ein separates Teil ist, das am Schaft (6) befestigt ist.

## Revendications

1. Soupape du type ayant un carter muni d'ouvertures destinée à être raccordée à une canalisation de fluide et comprenant :
une chambre de soupape comprenant au moins un orifice d'entrée (3) et au moins un orifice de sortie (4) pour le raccordement à une canalisation de fluide et pour définir une voie de passage d'écoulement de fluide à travers la chambre de soupape ayant une ligne médiane s'étendant entre l'orifice d'entrée (3) et l'orifice de sortie (4) ;
une tige (6 ; 13) ayant un axe de rotation perpendiculaire à la ligne médiane de la voie de passage d'écoulement de fluide s'étendant entre l'orifice d'entrée (3) et l'orifice de sortie (4) ;
une bille (5) montée à l'intérieur de la chambre de soupape ayant une voie de passage d'écoulement de fluide s'étendant le long d'une ligne médiane à travers la bille ; **caractérisée en ce que** ladite bille comporte au moins deux encoches (10, 16, 18, 19) pour la mise en prise avec ladite tige (6 ; 13) de manière à orienter la bille (5) à au moins deux positions différentes de telle sorte que, à au moins une desdites positions, la ligne médiane pour la voie de passage d'écoulement de fluide s'étendant à travers la bille (5) est maintenue à un angle par rapport à la tige (6 ; 13) qui est différent de la perpendiculaire.

2. Soupape selon la revendication 1, dans laquelle la tige (6 ; 13) est munie d'une pièce d'extrémité (15, 14, 17) de manière à s'apparier avec une encoche (10, 16, 18, 19) sur la bille, au niveau d'une position qui est décalée par rapport à l'axe longitudinal de la tige.

3. Soupape selon la revendication 2, dans laquelle la pièce d'extrémité (15, 14, 17) peut s'apparier avec une ou plusieurs des encoches (10, 16, 18, 19) sur la bille(5).

4. Soupape selon la revendication 3, dans laquelle la pièce d'extrémité (17) est une pièce séparée qui est fixée sur la tige (6).
